# EUROPEAN PATENT APPLICATION

(11) **EP 4 700 573 A1**
(43) Date of publication of application: **25.02.2026**
(21) Application number: 24926742.8
(22) Date of filing: 29.09.2024
(51) Int. Cl.: G06F 9/48, G06F 8/65, G06F 9/54

(54) **METHOD FOR SCHEDULING APPLICATION PROGRAM OF SAFETY-CERTIFIED COMPUTER PLATFORM, AND SAFETY-CERTIFIED COMPUTER PLATFORM**

(30) Priority: 26.02.2024 CN 202410209164
(71) Applicant: CRSC Research & Design Institute Group Co., Ltd., Beijing 100070 (CN)
(72) Inventor: LIN, Qiang, Beijing 100070 (CN); ZHANG, Lifeng, Beijing 100070 (CN); NIE, Zhiguo, Beijing 100070 (CN); LIU, Hui, Beijing 100070 (CN); LI, Xiang, Beijing 100070 (CN); YANG, Yao, Beijing 100070 (CN)
(74) Representative: Samson & Partner Patentanwälte mbB
(86) International application number: PCT/CN2024/122331
(87) International publication number: WO 2025/179875

(57) **Abstract**

The present invention discloses a method for scheduling an application program of a safety computer platform and a safety computer platform. The method includes: determining a current application program according to a calling sequence of application programs, and sending configuration data and state data corresponding to the current application program to the current application program to update the current application program; acquiring target input data corresponding to the current application program, sending the target input data to an updated current application program, and performing a logical operation based on the target input data through the updated current application program to obtain target output data corresponding to the current application program; and if the target output data satisfies a preset data sending condition, determining an output data packet according to the target output data in a sending buffer area, and sending the output data packet. The present invention avoids splitting and reorganizing input and output tasks of existing application programs, avoids generation of code interference between application programs, and realizes minimized modification to an integrated function of multiple application programs.

## Description

### TECHNICAL FIELD

The present invention relates to the technical field of rail transit, and in particular to a method for scheduling an application program of a safety computer platform and a safety computer platform.

### BACKGROUND ART

In order to achieve the goal of reducing costs and increasing efficiency in railway signal design engineering, there are scenarios where multiple systems with similar functions or structures are integrated into one system. For example, the integration of interlocking and zone controllers, the integration of interlocking and train control centers, the integration of interlocking and level crossings, the integration of multiple level crossings, etc.

At present, the solutions for integrating multiple application programs into one application program in the field of railway signal safety control include: one approach is to modify the safety computer platform, so that one safety computer platform supports the parallel execution of multiple application programs. Another approach is to realize the control flow of integrating multiple application programs by reconstructing the software.

However, for the solution of modifying the safety computer platform, it is necessary to modify the safety computer platform to realize the multi-thread scheduling function of application programs, which has the problem of application program resource preemption under multi-threading, and at the same time, the system safety under multi-threading cannot be guaranteed.

For the solution of realizing integration of application programs through software reconstruction, it is necessary to split and reorganize the input and output tasks of existing application programs. Moreover, compatibility issues will arise during combination, resulting in an expanded scope of software modification. The original codes between application programs will appear in one module, leading to code interference between the original application programs.

### SUMMARY

Embodiments of the present invention provide a method for scheduling an application program of a safety computer platform and a safety computer platform, which can solve the problems existing in current application program integration solutions.

According to one aspect of the present invention, a method for scheduling an application program of a safety computer platform is provided, applied to a safety computer platform supporting operation of a single application program, including:
determining a current application program according to a calling sequence of application programs, and sending configuration data and state data corresponding to the current application program to the current application program to update the current application program;
acquiring target input data corresponding to the current application program, sending the target input data to an updated current application program, and performing a logical operation based on the target input data through the updated current application program to obtain target output data corresponding to the current application program; and
if the target output data satisfies a preset data sending condition, determining an output data packet according to the target output data in a sending buffer area, and sending the output data packet, where the sending buffer area is configured to cache target output data corresponding to each application program.

According to another aspect of the present invention, a safety computer platform is provided, including: a platform software module, a scheduling management module and at least two application program modules, where the platform software module characterizes platform software, and the application program modules characterize application programs;
a current application program module among the at least two application program modules is configured to read configuration data and state data, and update original state data and original configuration data according to the configuration data and the state data; and is also configured to read target input data, and perform a logical operation based on the target input data to obtain target output data; and
the scheduling management module, acting between the application program modules and the platform software module, is configured to execute the method for scheduling an application program of a safety computer platform according to any embodiment of the present invention.

According to the technical solutions of the embodiments of the present invention, single-threaded calling of application programs is realized by sequentially calling the application programs. Moreover, the current application program is determined according to the calling sequence, and the state data and the configuration data are loaded into the current application program, so as to load the dependency relationship of the application programs into the current application program and avoid modifying the input and output tasks of the application programs. Then, the target input data corresponding to the current application program is sent to the corresponding application program, so that the current application program performs the logical operation based on the target input data to obtain the target output data. When the target output data satisfies the preset data sending condition, all the target output data is combined to obtain and output the output data packet. According to the embodiments of the present disclosure, on the basis of limiting the scope of modification to outside the business logic of the application programs, the effect of integrating multiple application programs is achieved, without splitting and reorganizing the input and output tasks of existing application programs, which does not affect the interfaces of existing application programs, nor damage the encapsulation of existing application programs, nor add new dependency relationships, thus avoiding the expansion of the scope of software modification. In addition, there is no need to load the original codes of each application program into one module, which prevents code interference between application programs and achieves the minimized modification for the integration function of multiple application programs.

It should be understood that the content described in this section is not intended to identify key or essential features of the embodiments of the present invention, nor is it intended to limit the scope of the present invention. Other features of the present invention will be easily understood through the following specification.

### BRIEF DESCRIPTION OF THE DRAWINGS

To illustrate the technical solutions in the embodiments of the present invention more clearly, the following briefly introduces the drawings required for describing the embodiments. It is obvious that the drawings in the following description show some embodiments of the present invention, and a person of ordinary skill in the art may still derive other drawings from these drawings without creative efforts.
FIG. 1 is a schematic diagram of a task scheduling flow for an application program provided by the related art;
FIG. 2 shows an execution flow for an input task of an integrated application program provided by the related art;
FIG. 3 shows an execution flow for an output task of an integrated application program provided by the related art;
FIG. 4 is a flow chart of a method for scheduling an application program of a safety computer platform provided by an embodiment of the present invention;
FIG. 5 is a schematic diagram of an application program scheduling flow of a scheduling management module provided by an embodiment of the present invention;
FIG. 6 is a schematic diagram of a processing flow for input data provided by an embodiment of the present invention;
FIG. 7 is a schematic diagram of input data splitting provided by an embodiment of the present invention;
FIG. 8 is a schematic diagram of a processing flow for output data provided by an embodiment of the present invention;
FIG. 9 is a schematic diagram of output data splitting provided by an embodiment of the present invention; and
FIG. 10 is a structural block diagram of a safety computer platform provided by an embodiment of the present invention.

### DETAILED DESCRIPTION

To enable those skilled in the art to better understand the solutions of the present invention, the technical solutions in the embodiments of the present invention will be described clearly and completely below in conjunction with the drawings in the embodiments of the present invention. Obviously, the described embodiments are only a part of the embodiments of the present invention, but not all of the embodiments. Based on the embodiments in the present invention, all other embodiments obtained by those of ordinary skill in the art without making creative efforts shall fall within the scope of protection of the present invention.

It should be noted that the terms "first", "second", etc. in the specification, claims, and above drawings of the present invention are used to distinguish similar objects and not necessarily to describe a specific order or sequence. It should be understood that the data used in this manner may be interchanged under appropriate circumstances so that the embodiments of the present invention described herein can be implemented in sequences other than those illustrated or described herein. In addition, the terms "include", "have", and any variations thereof are intended to cover non-exclusive inclusion. For example, a process, method, system, product, or device that includes a series of steps or units is not necessarily limited to those clearly listed steps or units, but may include other steps or units not clearly listed or inherent to such a process, method, product, or device.

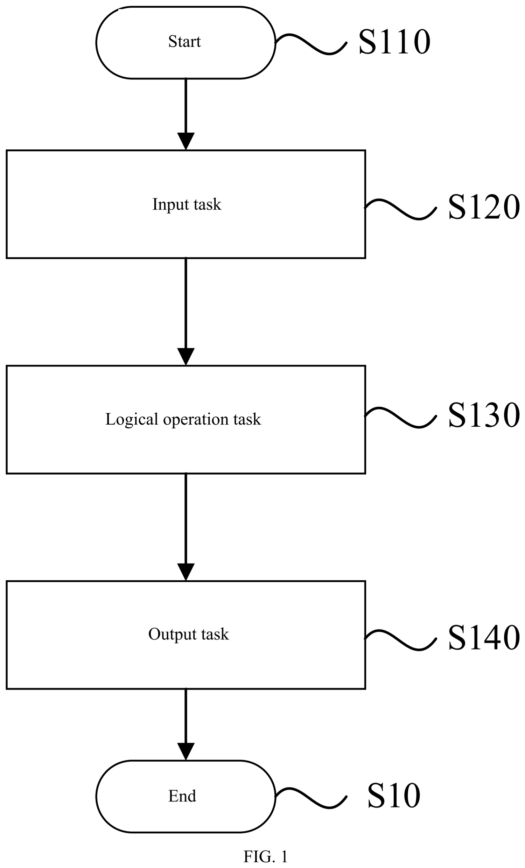

Currently, a railway signal system mostly adopts a two-out-of-two safety computer platform. The system consists of System I and System II forming a dual-redundancy structure. Each system uses two CPUs to run an application program for two-out-of-two comparison, and shuts down when there is a two-out-of-two inconsistency to ensure system safety. The application program of the signal system uses the C language to implement control logic. Moreover, to ensure the functional safety of the system, the application program generally does not adopt a multi-threaded approach. Instead, the application program is decomposed into a task scheduling flow with a sequential structure. The safety platform calls this sequential structure of the application program in each cycle to realize the control function of the system. FIG. 1 is a schematic diagram of a task scheduling flow for an application program provided by the related art. As shown in FIG. 1, the sequential structure of the application program includes: S110, start; S120, input task; S130, logical operation task; S140, output task; and S150, end.

In order to achieve the goal of reducing costs and increasing efficiency in railway signal design engineering, there are scenarios where multiple systems with similar functions or structures are integrated into one system. For example, the integration of interlocking and zone controllers, the integration of interlocking and train control centers, the integration of interlocking and level crossings, the integration of multiple level crossings, etc. Due to the safety requirements of the computer platform, the scope of modification is generally limited to within the application program, and the control flow for integrated processing of multiple sets of business logic is realized through software reconstruction.

According to the interface characteristics provided by the safety computer platform, the input data of the merged application program is mainly divided into two types. The first type is distributed data, that is, the input data obtained through the interface program of the computer platform is distinguished according to the device, and each application program acquires data according to a different device code. The second type is centralized data, that is, when input data is acquired through the interface program of the computer platform, all input data is provided at one time, and if the interface is called again within a cycle, no data will be obtained or the obtained data will be the same as that for the previous application program (depending on whether the data stored in the platform-provided interface is cleared immediately after the interface is called). Distributed input data corresponds to distributed output data, and centralized input data corresponds to centralized output data. For example, application program configuration data, acquisition driver data, and inter-system synchronization data are all centralized data, while network communication data is generally distributed data.

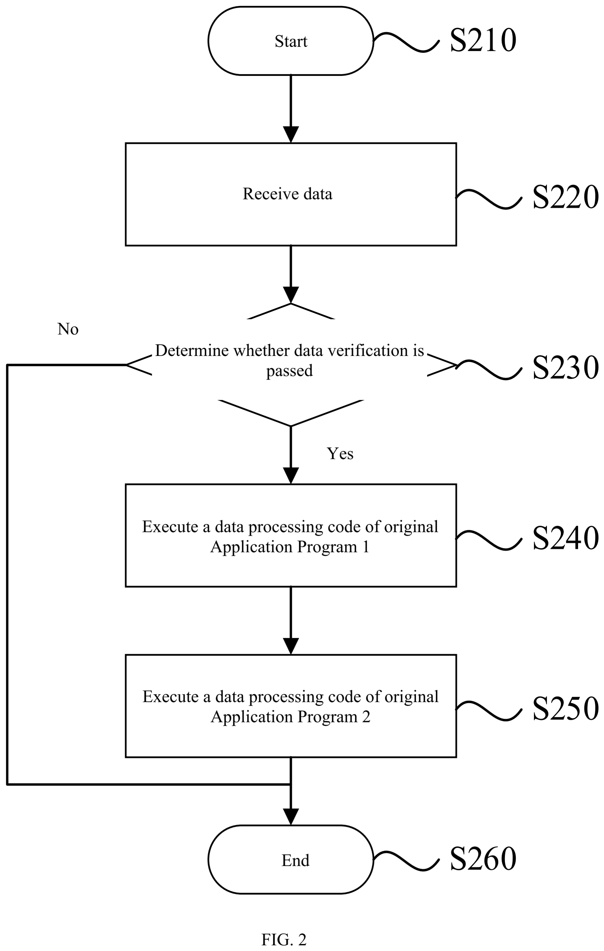

The following takes the code integration of two application programs as an example to introduce the existing technical solution:
The input task of the original application program can be simply decomposed into three steps: receiving data, verifying data, and processing data. After application program integration, for data that passes verification, it is necessary to split the data according to a certain format, and then call the input data processing interface of each application program separately for processing. FIG. 2 shows an execution flow for an input task of an integrated application program provided by the related art. As shown in FIG. 2, the input task includes sequential execution of the following steps: S210, start; S220, receive data; S230, determine whether data verification is passed; if yes, execute S240; otherwise execute S260; S240, execute a data processing code of original Application Program 1; S250, execute a data processing code of original Application Program 2; and S260, end.

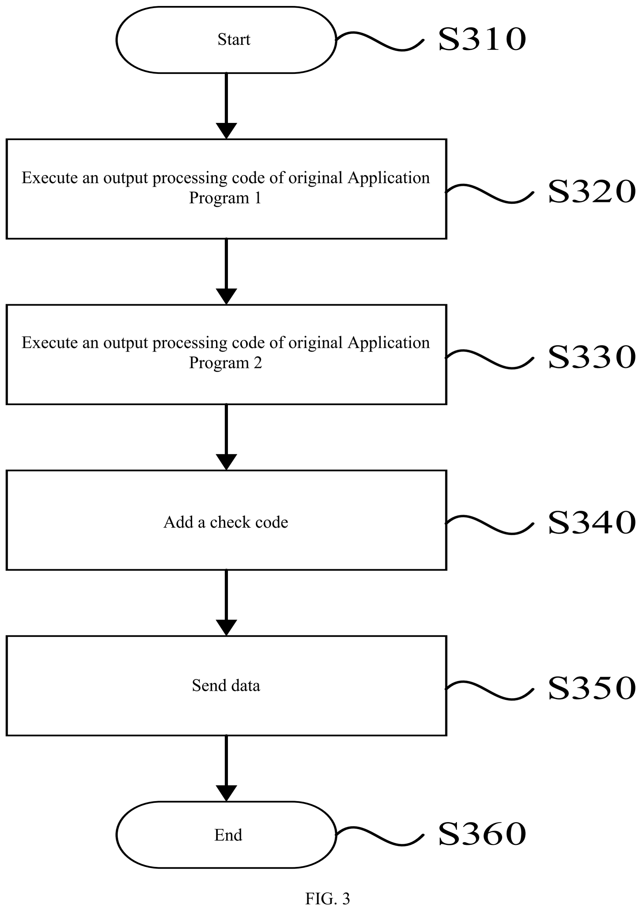

The output task of the original application program can be simply decomposed into three steps: generating data, adding a check code, and sending data. After application program integration, it is necessary to call the output data generation interface of each application program separately to generate each output data, then combine the output data, add an overall check code, and send it. FIG. 3 shows an execution flow for an output task of an integrated application program provided by the related art. As shown in FIG. 3, the output task includes sequential execution of the following steps: S310, start; S320, execute an output processing code of original Application Program 1; S330, execute an output processing code of original Application Program 2; S340, add a check code; S350, send data; and S360, end.

From the perspective of the above input and output tasks after application program integration, the input task of the original application program needs to be split into two modules: data reception and verification, and input processing. During integration, the new data reception and verification module interfaces with the data processing module of each original application program. Therefore, compatibility processing is required at the interface. It is highly likely that inconsistent variable definitions or inconsistent data transmission approaches will necessitate the reconstruction of this part of the code, causing the scope of software modification to extend to all modules related to the input task. Similarly, the processing of the output task will encounter the same issue.

For logical operation tasks, the original two application programs belong to two different systems and exchange information via network communication. For example, the interlocking system sends train approach notifications to the level crossing system, and the level crossing system sends level crossing state to the interlocking system. Therefore, integration of application program business logic should consider establishing a new data channel to transmit data sent to other application programs through an internal channel within the program.

The existing technical solution is to set a judgment flag. In the data sending interface of the output task, if it is determined that the data is sent to another application program in the system, it will be copied to a newly created global variable. At the same time, when another application program needs to receive data output by another application program in the system, it will copy from this newly created global variable. This method further increases the data dependency relationship between the two independent application programs, while leading to greater modifications to the input and output tasks.

In the existing technical solution for implementing application program integration functions, there are the following problems:
1. It is necessary to split and reorganize the input and output tasks of existing application programs. Moreover, compatibility issues will arise during combination, resulting in an expanded scope of software modification.
2. The original code between application programs appears in one module, making it impossible to independently change or upgrade the original application programs.
3. There is are data dependency between integrated application programs, and there is no separate module to manage the dependency relationship, resulting in a chaotic relationship between application programs.

In view of the above problems in the related art, the present invention provides a solution from the perspective of application programs that adds a scheduling management module between existing application programs and the platform software of the safety computer platform. The module is configured to realize the scheduling and data processing of multiple application programs within a single application cycle, thereby achieving application program integration. It should be noted that each integrated application program package maintains an independent structure, and the scheduling management module loads the state and configuration of the application program into the application program to realize dependency management between application programs, thereby achieving the original business functions through the scheduling management module.

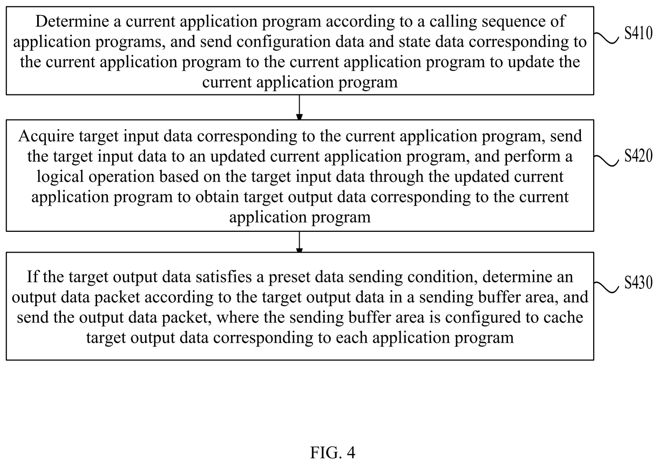

FIG. 4 is a flow chart of a method for scheduling an application program of a safety computer platform provided by an embodiment of the present invention. This embodiment is applicable to scenarios of rail transit signal safety control. The method may be executed by a safety computer platform supporting single application program operation, which may be implemented in the form of hardware and/or software. As shown in FIG. 4, the method includes:
S410, determining a current application program according to a calling sequence of application programs, and sending configuration data and state data corresponding to the current application program to the current application program to update the current application program.

The current application program characterizes the application program that should run currently. The state data may characterize the state of modules within the application program during the previous cycle. When the application program is called, the state data of the previous cycle within the state data area is loaded into the application program to restore its state in the previous cycle. After the application program performs a logical operation based on input data during the current cycle, there may be changes in the state of modules. The state data of the current cycle needs to be cached into the state data area for state restoration in the next cycle.

The configuration data may characterize the configuration of modules within the application program. The configuration data is stored in a configuration data area. When the application program is called, the configuration data in the configuration data area is loaded into the application program.

The configuration data and the state data required by the application programs are stored as internal variables of the scheduling management module and distributed to each application program through the above interfaces.

To realize the function of loading a configuration and a state for each application program by the scheduling management module, it is necessary to obtain a configuration loading interface function and a state loading interface function of each application program. The configuration loading interface function is used to read the content of the configuration data area after the scheduling management module provides the start address and the length of the configuration data area as inputs, so as to update the configuration data of all internal modules of the application program and feed back the length of the configuration data read by the application program. The state loading interface function is used to read the content of the state data area after the scheduling management module provides the start address and the length of the state data area as inputs, so as to update the state data of all internal modules of the application program and feed back the length of the state data read by the application program.

The calling sequence of application programs is a pre-determined order and can be adjusted according to business scenarios. The embodiment of the present invention does not impose specific limitations on the calling sequence.

Exemplarily, the application program to be called is determined in accordance with the calling sequence of application programs as the current application program. The start address and the length of the configuration data area are sent to the current application program, so that the current application program reads corresponding configuration data from the configuration data area. The current application program configures internal modules based on the acquired configuration data. A configuration data read length returned by the current application program is acquired, and the start address and the length of the configuration data area are updated according to the configuration data read length. The start address and the length of the state data area are sent to the current application program, so that the current application program reads corresponding state data from the state data area. The current application program restores the state of internal modules based on the acquired state data. A state data read length returned by the current application program is acquired, and the start address and the length of the state data area are updated according to the state data read length.

In some embodiments, the scheduling management module includes a top-level scheduling interface to realize the scheduling function of multiple application programs without modifying the scheduling tasks of existing application programs. For example, an existing application program provides a preset interface for periodic calls by the safety computer platform. The present invention does not modify the implementation logic of the preset interface, but modifies the name of the preset interface, while the function still represents the main scheduling task of the corresponding application program. The top-level scheduling interface of the scheduling management module is named after the original name of the preset interface of the application program. For example, if the original name of an application program's preset interface is "a", the modified name is "b", and the name of the top-level scheduling interface is "a".

In the embodiment of the present invention, the top-level scheduling interface is configured to load the configuration data and the state data into the current application program in each cycle, and then call the modified name of the preset interface of the existing application program to realize the scheduling task for the application program. Finally, the state data of the current application program is saved. During the call, the program identifier of the current application program is recorded via internal variables of the scheduling management module, for use by the input and output management interfaces when selecting data. The input management interface is configured to replace the platform data receiving interface called by existing application programs, enabling data reception. The output management interface is configured to replace the platform data sending interface called by existing application programs, enabling data sending. Since all data of application programs is received or sent through the scheduling management module, for data transmitted between application programs, the input management interface and output management interface can be implemented directly by copying internal variables of the scheduling management module.

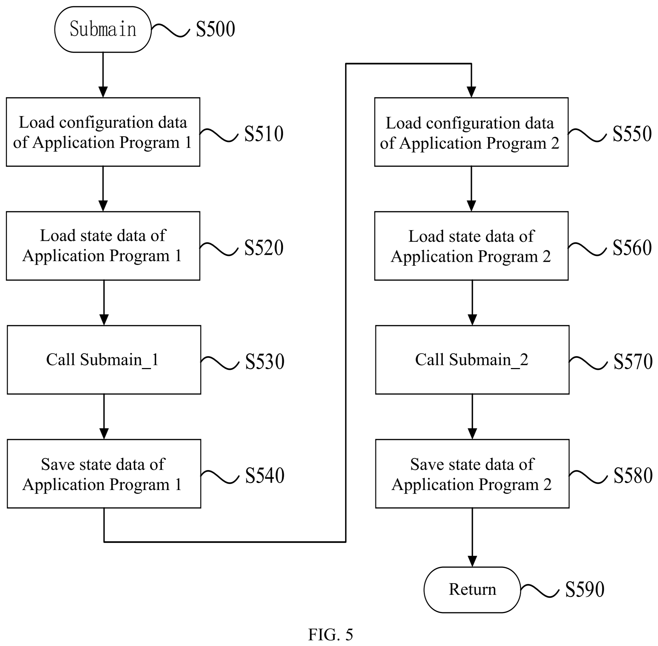

FIG. 5 is a schematic diagram of an application program scheduling flow of a scheduling management module provided by an embodiment of the present invention. The name of the top-level scheduling interface is Submain, and the names of the preset interfaces of the 2 integrated application programs are modified to Submain_1 and Submain_2. As shown in FIG. 5, the scheduling flow includes: S500: detect that the top-level scheduling interface Submain is called by the safety computer platform; S510: load configuration data of Application Program 1; S520: load state data of Application Program 1; S530: call Submain_1; S540: save state data of Application Program 1; S550: load configuration data of Application Program 2; S560: load state data of Application Program 2; S570: call Submain_2; S580: save state data of Application Program 2; and S590: return.

S420, acquiring target input data corresponding to the current application program, sending the target input data to an updated current application program, and performing a logical operation based on the target input data through the updated current application program to obtain target output data corresponding to the current application program.

The target input data refers to the application program input data to be processed by the current application program. The type of the target input data may be centralized data or distributed data. The target output data is the result of the logical operation performed based on the target input data output by the current application program. If the target input data is centralized data, the target output data is also centralized data. If the target input data is distributed data, the target output data is also distributed data.

In some embodiments, for first acquisition of input data in a current cycle, if the input data satisfies a preset input condition, the input data is split according to application programs to obtain candidate input data corresponding to each application program, and the candidate input data is saved to a data buffer area corresponding to each application program. The data buffer area corresponding to each application program is queried according to the currently running application program to obtain the target input data.

The preset input conditions may characterize the input data as centralized data. For the first acquisition of input data in the current cycle, if the input data is centralized data, a check code in the input data is acquired, and the input data is verified according to the check code. If verification is passed, the input data is parsed to obtain a data offset and a data length of the candidate input data corresponding to each application program. The input data is split according to the data offset and the data length to obtain candidate input data corresponding to each application program.

If the input data is centralized data, the input data is a data packet received at one time that contains data to be processed by each application program in the integrated application programs. The data offset characterizes the offset of each candidate input data in the data packet. The data length characterizes the length of each candidate input data in the data packet.

For example, the data packet is parsed to obtain input data to be processed by Application Program 1 and Application Program 2. If the data offset of Application Program 1 is 1k and the data length is 2k, then starting from the 1k data position in the data packet, 2k of data after this position is intercepted as the candidate input data for Application Program 1. If the data offset of Application Program 2 is 4k and the data length is 1k, then starting from the 4k data position in the data packet, 1k of data after this position is intercepted as the candidate input data for Application Program 2.

Optionally, the splitting the input data according to the data offset and the data length to obtain the candidate input data corresponding to each application program includes: deleting the check code in the input data; splitting the input data after deleting the check code according to the data offset and the data length corresponding to each application program to obtain input data corresponding to each application program; and determining an input check code of each input data according to a type of the input data corresponding to each application program, and combining the input data corresponding to each application program and an input check code of the input data to obtain the candidate input data.

In some embodiments, for non-first acquisition of input data in a current cycle, if the input data satisfies a preset input condition, a data buffer area corresponding to each application program is queried according to currently running application programs to obtain the target input data.

Optionally, after the input management interface is called, it is determined whether the input data to be acquired is centralized data. For distributed data, the input task directly calls the platform data receiving interface to acquire the input data and transmit it to the current application program. For centralized data, it is further determined whether the data obtained this time is the first acquisition of input data in the current cycle. If it is the first acquisition of input data, centralized data is received once and verification is performed. After the check code is removed from the input data that passes the verification, the data is split into a data buffer area corresponding to each application program, and a new check code is determined according to the type of input data of each application program. The new check code is added to the input data of each application program to obtain the candidate input data for each application program. Then, the split candidate input data is selected according to the current application program and transmitted to the current application program. If it is not the first acquisition of input data, the split candidate input data corresponding to the current application program is selected and transmitted to the current application program. The technical solutions of the present invention do not modify the input task of existing application programs, but replace the platform data receiving interface called by existing application programs using the input management interface implemented by the scheduling management module.

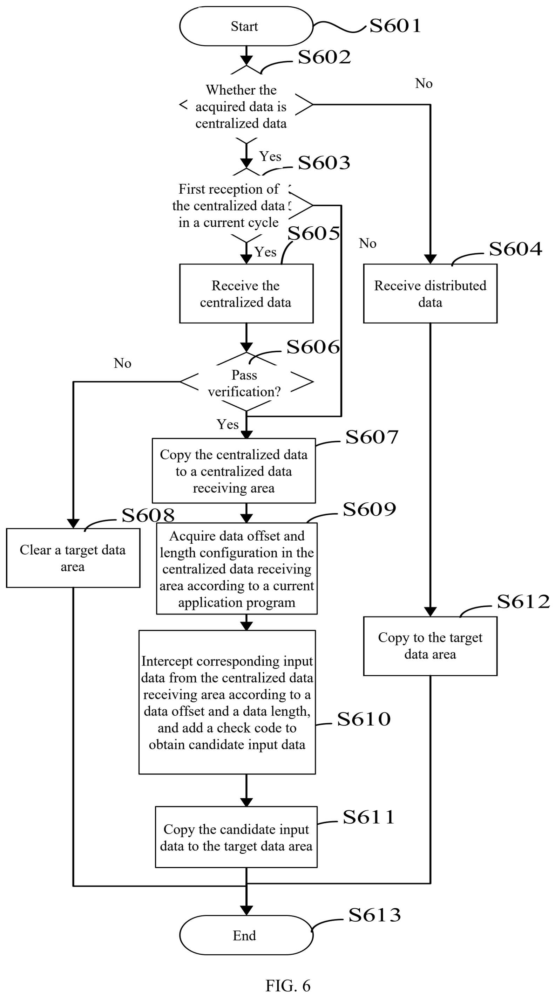

FIG. 6 is a schematic diagram of a processing flow for input data provided by an embodiment of the present invention. As shown in FIG. 6, the processing flow of input data includes: S601, start; S602, determine whether the acquired data is centralized data; if yes, execute S603; otherwise execute S604; S603, determine whether it is the first reception of the centralized data in a current cycle; if yes, execute S605; otherwise execute S607; S604, receive distributed data and proceed to execute S612; S605: receive the centralized data; S606: determine whether the centralized data passes verification; if yes, execute S607; otherwise, execute S608; S607: copy the centralized data to a centralized data receiving area and proceed to S609; S608: clear a target data area, where the target data area is a data buffer area corresponding to each application program; S609: acquire data offset and length configuration in the centralized data receiving area according to a current application program; S610: intercept corresponding input data from the centralized data receiving area according to a data offset and a data length, and add a check code to obtain candidate input data; S611: copy the candidate input data to the target data area; S612: copy the distributed data to the target data area; and S613, end.

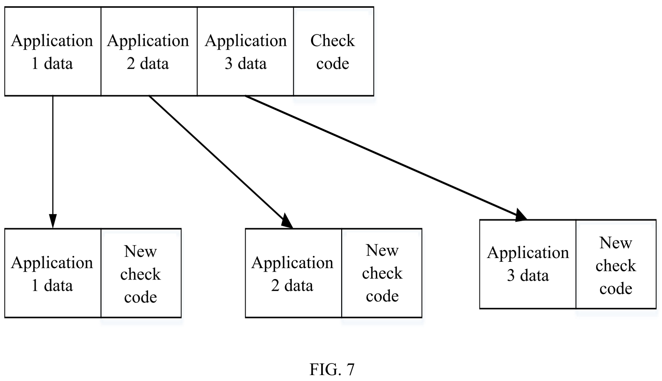

FIG. 7 is a schematic diagram of input data splitting provided by an embodiment of the present invention. As shown in FIG. 7, the centralized data receiving area includes Application 1 data, Application 2 data, Application 3 data, and a check code. The data buffer area corresponding to each application program in the target data area includes Application 1 data and a new check code, Application 2 data and a new check code, as well as Application 3 data and a new check code.

S430, if the target output data satisfies a preset data sending condition, determining an output data packet according to the target output data in a sending buffer area, and sending the output data packet, where the sending buffer area is configured to cache target output data corresponding to each application program.

The preset data sending condition includes that the target output data is the last data to be sent in the current cycle. If it is detected that the last data to be sent in the current cycle is present, it is determined that the target output data satisfies the preset data sending condition. For cases where the data is not the last data to be sent in the current cycle, the data to be sent is copied to the sending buffer area after the check code is removed.

Exemplarily, if the target output data satisfies the preset data sending condition, the target output data is stored in the sending buffer area after the check code is removed. An output check code is determined according to the target output data corresponding to each application program in the sending buffer area. The output check code is concatenated to the target output data in the sending buffer area to obtain the output data packet.

After the target output data is acquired, it is determined whether the newly acquired target output data is the last data to be sent in the current cycle. If it is the last data to be sent, the newly acquired target output data is copied to the sending buffer area after the check code is removed. Then, a check code is recalculated according to all target output data in the entire sending buffer area, the output data packet is obtained after the check code is appended, and the platform data sending interface is called to send the output data packet. If it is not the last data to be sent, the data to be sent is copied to the sending buffer area after the check code is removed.

In some embodiments, after the output management interface is called, it is determined whether the data to be sent is centralized data. For distributed data, the output task directly calls the platform data sending interface. For centralized data, the output task calls the output management interface, and determines whether the data to be sent is the last data to be sent in the current cycle through the output management interface. If it is not the last data to be sent, the data to be sent is copied to the sending buffer area after the check code is removed. If it is the last data to be sent, the data to be sent is copied to the sending buffer area after the check code is removed. Then, a new check code is recalculated according to all data in the entire sending buffer area, and the new check code is appended to the end of all the data in the sending buffer area to obtain the output data packet. The platform data sending interface is called to send the output data packet. The technical solutions of the present invention do not modify the output task of existing application programs, but replace the platform data sending interface called by existing application programs using the output management interface implemented by the scheduling management module.

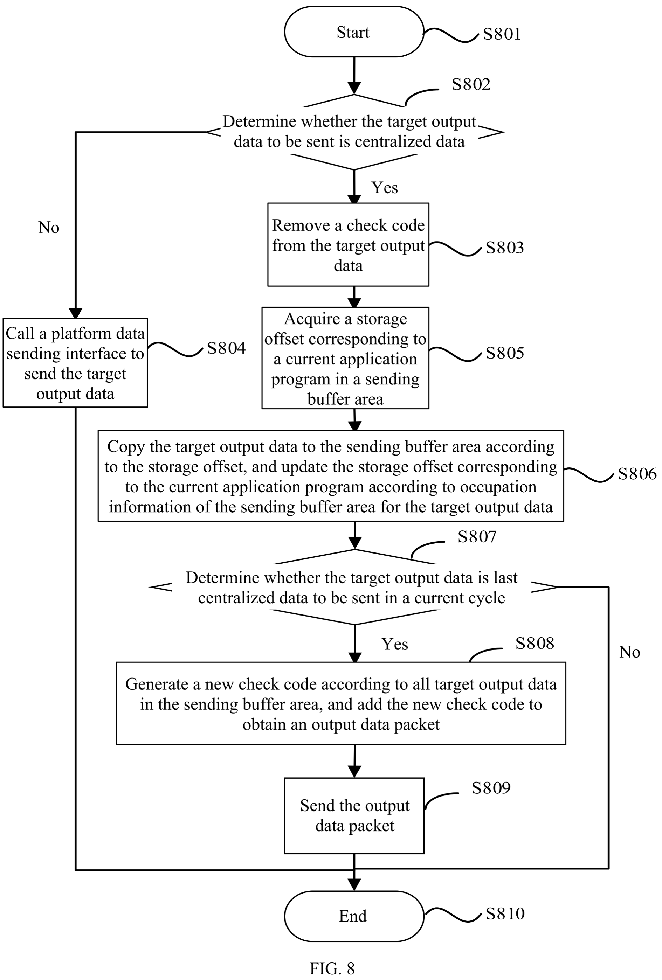

FIG. 8 is a schematic diagram of a processing flow for output data provided by an embodiment of the present invention. As shown in FIG. 8, the processing flow of output data includes: S801, start; S802: determine whether the target output data to be sent is centralized data; if yes, execute S803; otherwise, execute S804; S803: remove a check code from the target output data; S804: call a platform data sending interface to send the target output data; S805: acquire a storage offset corresponding to a current application program in a sending buffer area; S806: copy the target output data to the sending buffer area according to the storage offset, and update the storage offset corresponding to the current application program according to occupation information of the sending buffer area for the target output data; S807: determine whether the target output data is last centralized data to be sent in a current cycle; if yes, execute S808; otherwise, execute S810; S808: generate a new check code according to all target output data in the sending buffer area, and add the new check code to obtain an output data packet; S809: send the output data packet; and S810: end.

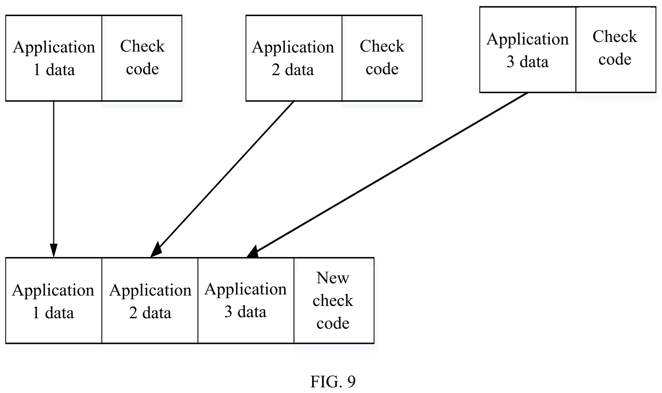

FIG. 9 is a schematic diagram of output data splitting provided by an embodiment of the present invention. As shown in FIG. 9, the check code is removed from the target output data of Application 1, and the target output data of Application 1 is copied to the storage location corresponding to Application 1 in the buffer area according to the storage offset corresponding to Application 1 in the buffer area. The check code is removed from the target output data of Application 2, and the target output data of Application 2 is copied to the storage location corresponding to Application 2 in the buffer area according to the storage offset corresponding to Application 2 in the buffer area. The check code is removed from the target output data of Application 3, and the target output data of Application 3 is copied to the storage location corresponding to Application 3 in the buffer area according to the storage offset corresponding to Application 3 in the buffer area. Then, a new check code is generated according to all target output data in the buffer area, and all the target output data and the new check code in the buffer area are concatenated to obtain the output data packet.

According to the embodiments of the present invention, single-threaded calling of application programs is realized by sequentially calling the application programs. Moreover, the current application program is determined according to the calling sequence, and the state data and the configuration data are loaded into the current application program, so as to load the dependency relationship of the application programs into the current application program and avoid modifying the input and output tasks of the application programs. Then, the target input data corresponding to the current application program is sent to the corresponding application program, so that the current application program performs the logical operation based on the target input data to obtain the target output data. When the target output data satisfies the preset data sending condition, all the target output data is combined to obtain and output the output data packet. According to the embodiments of the present disclosure, on the basis of limiting the scope of modification to outside the business logic of the application programs, the effect of integrating multiple application programs is achieved, without splitting and reorganizing the input and output tasks of existing application programs, which does not affect the interfaces of existing application programs, nor damage the encapsulation of existing application programs, nor add new dependency relationships, thus avoiding the expansion of the scope of software modification. In addition, there is no need to load the original codes of each application program into one module, which prevents code interference between application programs and achieves the minimized modification for the integration function of multiple application programs.

In some embodiments, after the performing a logical operation based on the target input data through the updated current application program to obtain target output data corresponding to the current application program, the method further includes: sending a start address and a length of a state data area to the current application program, so that the current application program saves the state data to the state data area; and acquiring an occupied length of the state data area returned by the current application program, and updating the start address and the length of the state data area according to the occupied length of the state data area. To realize the function of the scheduling management module to save the state for each application program, it is also necessary to acquire a state saving interface function of each application program. The state saving interface function is used to save the state data of all modules in the application program to the state data area after the scheduling management module provides the start address and length of the state data area as inputs and feed back the length of the state data area occupied by the current application program.

In the application program integration solution of the present invention, each application program to be integrated is treated as a closed independent module. Configuration data and state data are loaded for the independent module in each cycle to restore the state of the current application program in the previous cycle. Then, after input data is transmitted to the current application program, the current application program is called to perform the logical operation, and the state data of the current application program is saved for state services in the next cycle. In the present invention, except for adding functions for loading configuration data, loading state data, saving state data and replacing calls to platform interfaces, no other modifications to the application programs are required. Existing application program interfaces are not affected, the closure of existing application programs is not damaged, new dependency relationships are not added, modifications to existing application programs are minimal, and the minimized modification scope for the integration function of multiple application programs is achieved. The present invention also has the advantages of clear modification approaches and simple modification content. There is no need to modify the application business logic, and even developers who are not familiar with the business logic of existing application programs can realize application program integration through the solutions of the present invention.

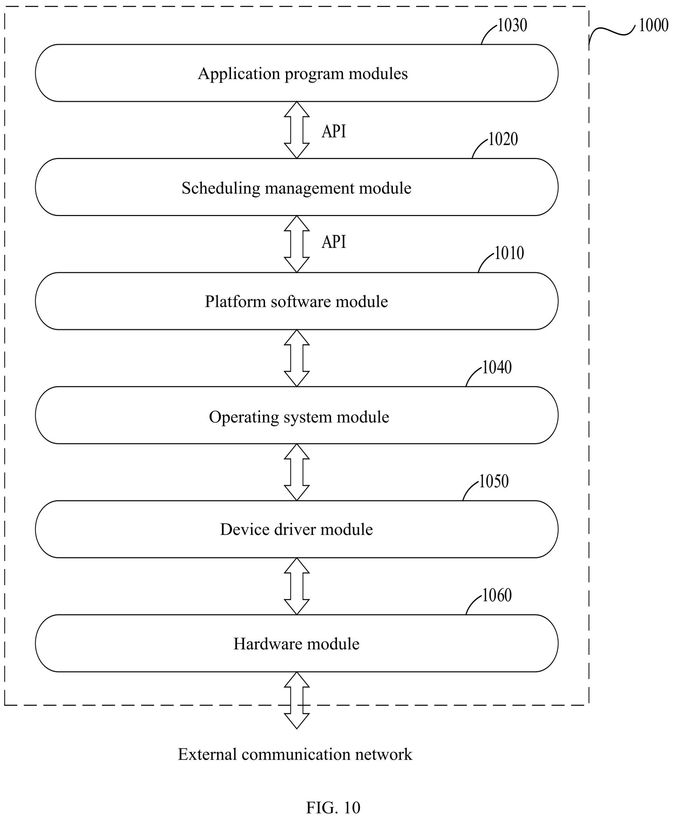

FIG. 10 is a structural block diagram of a safety computer platform provided by an embodiment of the present invention. As shown in FIG. 10, the safety computer platform 1000 includes: a platform software module 1010, a scheduling management module 1020, and at least two application program modules 1030, where the platform software module 1010 characterizes platform software, and the application program modules 1030 characterize application programs;
a current application program module among the at least two application program modules 1030 is configured to read configuration data and state data, and update original state data and original configuration data according to the configuration data and the state data; and is also configured to read target input data, and perform a logical operation based on the target input data to obtain target output data; and
the scheduling management module 1020, acting between the application program modules 1030 and the platform software module 1010, is configured to execute the method for scheduling an application program of a safety computer platform according to any embodiment of the present invention.

The scheduling management module 1020 communicates with the application program module 1030 and the platform software module via interfaces (APIs), respectively.

Optionally, the safety computer platform 1000 further includes an operating system module 1040, a device driver module 1050, and a hardware module 1060, etc.

The safety computer platform provided by the embodiments of the present invention can execute the method for scheduling an application program of a safety computer platform provided by any embodiment of the present invention, and possesses the corresponding functional modules and beneficial effects for executing the method.

It should be understood that the various forms of flows shown above may be used, with steps reordered, added or deleted. For example, the steps described in the present invention may be performed in parallel, sequentially, or in different orders, as long as the desired results of the technical solutions of the present invention can be achieved, which is not limited herein.

The above specific implementations do not constitute a limitation on the scope of protection of the present invention. It should be understood by those skilled in the art that various modifications, combinations, sub-combinations, and substitutions can be made according to design requirements and other factors. Any modifications, equivalent substitutions, improvements, etc. made within the spirit and principles of the present invention shall all be included within the scope of protection of the present invention.

## Claims

1. A method for scheduling an application program of a safety computer platform, applied to a safety computer platform supporting operation of a single application program, **characterized by** comprising:
determining a current application program according to a calling sequence of application programs, and sending configuration data and state data corresponding to the current application program to the current application program to update the current application program;
acquiring target input data corresponding to the current application program, sending the target input data to an updated current application program, and performing a logical operation based on the target input data through the updated current application program to obtain target output data corresponding to the current application program; and
if the target output data satisfies a preset data sending condition, determining an output data packet according to the target output data in a sending buffer area, and sending the output data packet, wherein the sending buffer area is configured to cache target output data corresponding to each application program.

2. The method according to claim 1, **characterized in that** the acquiring target input data corresponding to the current application program comprises:
for first acquisition of input data in a current cycle, if the input data satisfies a preset input condition, splitting the input data according to application programs to obtain candidate input data corresponding to each application program, and saving the candidate input data to a data buffer area corresponding to each application program; and
querying the data buffer area corresponding to each application program according to currently running application programs to obtain the target input data.

3. The method according to claim 2, **characterized in that** the splitting the input data according to application programs to obtain candidate input data corresponding to each application program comprises:
acquiring a check code in the input data, and verifying the input data according to the check code;
if verification is passed, parsing the input data to obtain a data offset and a data length of the candidate input data corresponding to each application program; and
splitting the input data according to the data offset and the data length to obtain the candidate input data corresponding to each application program.

4. The method according to claim 3, **characterized in that** the splitting the input data according to the data offset and the data length to obtain the candidate input data corresponding to each application program comprises:
deleting the check code in the input data;
splitting the input data after deleting the check code according to the data offset and the data length corresponding to each application program to obtain input data corresponding to each application program; and
determining an input check code of each input data according to a type of the input data corresponding to each application program, and combining the input data corresponding to each application program and an input check code of the input data to obtain the candidate input data.

5. The method according to claim 1, **characterized in that** the acquiring target input data corresponding to the current application program comprises:
for non-first acquisition of input data in a current cycle, if the input data satisfies a preset input condition, querying a data buffer area corresponding to each application program according to currently running application programs to obtain the target input data.

6. The method according to claim 1, **characterized in that** the determining a current application program according to a calling sequence of application programs, and sending configuration data and state data corresponding to the current application program to the current application program comprises:
determining an application program to be called according to the calling sequence of the application programs as the current application program;
sending a start address and a length of a configuration data area to the current application program, so that the current application program reads corresponding configuration data from the configuration data area; and
sending a start address and a length of a state data area to the current application program, so that the current application program reads corresponding state data from the state data area.

7. The method according to claim 6, **characterized by** further comprising:
after the current application program reads the corresponding configuration data from the configuration data area, acquiring a configuration data read length returned by the current application program, and updating the start address and the length of the configuration data area according to the configuration data read length;
or after the current application program reads the corresponding state data from the state data area, acquiring a state data read length returned by the current application program, and updating the start address and the length of the state data area according to the state data read length.

8. The method according to claim 1, **characterized in that** the if the target output data satisfies a preset data sending condition, determining an output data packet according to the target output data in a sending buffer area comprises:
if the target output data satisfies the preset data sending condition, storing the target output data after deleting a check code in the sending buffer area;
determining an output check code according to the target output data corresponding to each application program in the sending buffer area; and
concatenating the output check code to the target output data in the sending buffer area to obtain the output data packet.

9. The method according to claim 1, **characterized in that** after the performing a logical operation based on the target input data through the updated current application program to obtain target output data corresponding to the current application program, the method further comprises:
sending a start address and a length of a state data area to the current application program, so that the current application program saves the state data to the state data area; and
acquiring an occupied length of the state data area returned by the current application program, and updating the start address and the length of the state data area according to the occupied length of the state data area.

10. A safety computer platform, **characterized by** comprising: a platform software module, a scheduling management module and at least two application program modules, wherein the platform software module characterizes platform software, and the application program modules characterize application programs;
a current application program module among the at least two application program modules is configured to read configuration data and state data, and update original state data and original configuration data according to the configuration data and the state data; and is also configured to read target input data, and perform a logical operation based on the target input data to obtain target output data; and
the scheduling management module, acting between the application program modules and the platform software module, is configured to execute the method for scheduling an application program of a safety computer platform according to any one of claims 1-9.
